# EUROPEAN PATENT APPLICATION

(11) **EP 4 768 666 A1**
(43) Date of publication of application: **01.07.2026**
(21) Application number: 25225320.8
(22) Date of filing: 18.12.2025
(51) Int. Cl.: E01C 19/48, E01C 19/00

(54) **CONSTRUCTION WORK SUPPORT DEVICE, ROAD MACHINE, AND CONSTRUCTION WORK SUPPORT PROGRAM**

(30) Priority: 26.12.2024 JP 2024230323
(71) Applicant: Sumitomo Construction Machinery Co., Ltd., Tokyo 141-6025 (JP)
(72) Inventor: TERAMOTO, Touta, Chiba 263-0001 (JP)
(74) Representative: Louis Pöhlau Lohrentz

(57) **Abstract**

A construction work support device (300) is configured to support a road machine (100) in construction work, and includes a control device (50) configured to: receive information about a work zone (90) and specifications of the road machine as input data; and divide the work zone into a plurality of subsections based on the input data.

## Description

### CROSS-REFERENCE TO RELATED APPLICATION

This application claims priority to Japanese Patent Application No. 2024-230323, filed with Japan Patent Office on December 26, 2024, the entire contents of which are incorporated herein by reference.

### BACKGROUND

### 1. Technical Field

The present disclosure relates to a construction work support device, a road machine, and a construction work support program.

### 2. Description of Related Art

Some existing work site division systems propose a work site division plan based on, for example, certain conditions or requirements stipulated in the Building Standards Act, Japanese Land Law, etc.

### SUMMARY

According to an embodiment of the present disclosure, a construction work support device is configured to support a road machine in construction work, and includes a control device configured to: receive information about a work zone and specifications of the road machine as input data; and divide the work zone into a plurality of subsections based on the input data.

### BRIEF DESCRIPTION OF THE DRAWINGS

FIG. 1A is a diagram showing an example architecture of a construction work support system including a construction work support device according to an embodiment of the present disclosure;
FIG. 1B is another diagram showing an example architecture of the construction work support system;
FIG. 2 is a block diagram showing an example structure of the construction work support device;
FIG. 3 is a flowchart showing an example flow of a work zone division process;
FIG. 4 is a plan view of a work zone for explaining data related to a road machine's work zone;
FIG. 5 is a plan view of a work zone for explaining: a work zone divided into multiple subsections; and the order in which the road machine performs construction work on the subsections;
FIG. 6 is a plan view of a work zone for explaining a layout of working routes;
FIG. 7 is a plan view of a work zone for explaining a layout of preparatory routes;
FIG. 8 is another plan view of a work zone for explaining a layout of preparatory routes;
FIG. 9 is a plan view of a work zone for explaining a layout of supply points and transport routes; and
FIG. 10 is another plan view of a work zone for explaining a layout of supply points and transport routes.

### DETAILED DESCRIPTION

When a road machine works on (paves) a certain work zone (i.e. work site), systems used heretofore cannot divide the work zone.

There is therefore a need for a device that can adequately and automatically divide a road machine's work zone into multiple subsections.

The above-described construction work support device according to an embodiment of the present disclosure makes it possible to divide, appropriately and automatically, a road machine's work zone into multiple subsections.

An embodiment of the present disclosure will be described with reference to the accompanying drawings. Note that components that are the same or substantially the same are assigned the same or substantially the same reference numerals/codes throughout the accompanying drawings, so that redundant description will be spared.

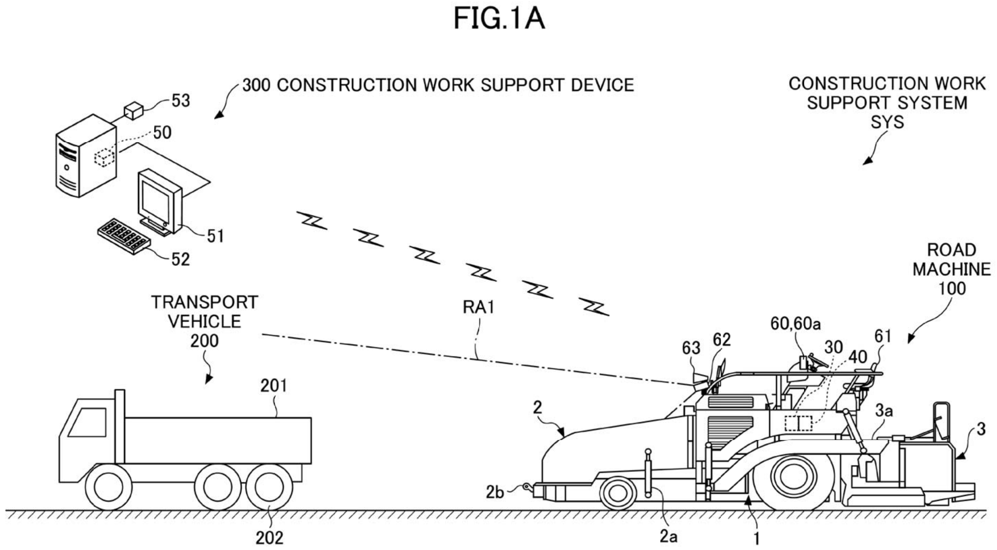

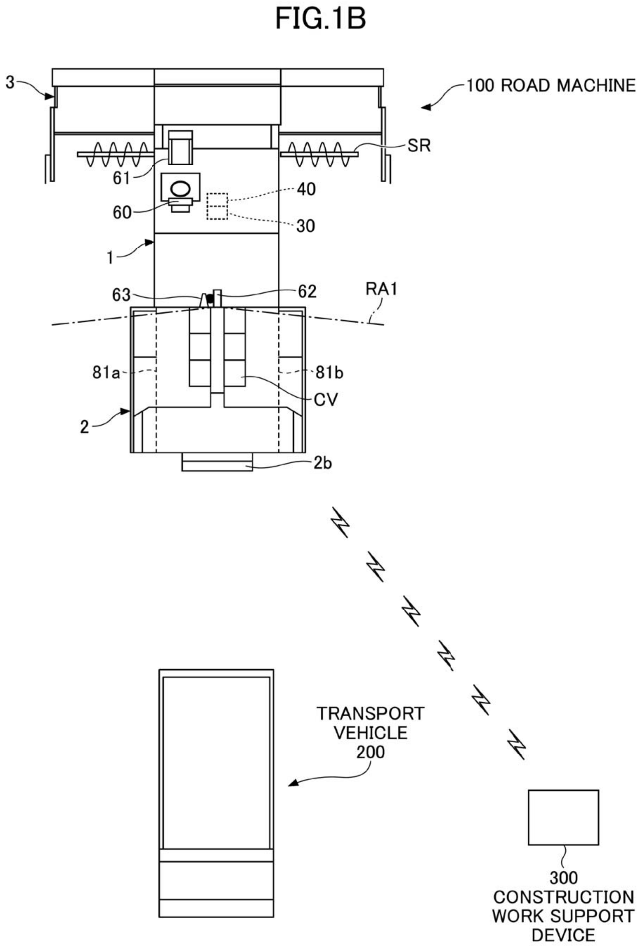

FIG. 1A and FIG. 1B are diagrams each showing an example architecture of a construction work support system SYS including a construction work support device 300 according to an embodiment of the present disclosure. The construction work support system SYS includes at least: a road machine 100; a transport vehicle 200 that delivers the pavement material to be supplied to the road machine 100; and a construction work support device 300 that supports the road machine 100 in construction work. To be more specific, FIG. 1A shows a left side view of the road machine 100 and the transport vehicle 200, and FIG. 1B shows an upper view of the road machine 100 and the transport vehicle 200. To be more specific, FIG. 1A and FIG. 1B both show a state in which the transport vehicle 200 moves backward towards the road machine 100 (and in which the pavement materials is yet to be supplied to the road machine 100).

In the illustrated example, the road machine 100 and the construction work support device 300 are each equipped with a wireless communication device and connected to each other via an information communication network such as a mobile telephone communication network, a satellite communication network, a near-field wireless communication network, and so forth, or connected to each other directly. The transport vehicle 200 may also be equipped with a wireless communication device and connected to the road machine 100 and the construction work support device 300 via an information communication network. The construction work support system SYS may include one road machine 100, one transport vehicle 200, and one construction support device 300, or include two or more of each. In the illustrated example, the construction work support system SYS includes one road machine 100, one transport vehicle 200, and one construction work support device 300. The construction work support system SYS may also be structured without a transport vehicle 200.

The construction work support device 300 supports the road machine 100 in construction work. In the illustrated example, the construction work support device 300 is a server computer installed in a control center or the like located at a distant place from the work site. The construction work support device 300 includes a control device 50, a display device 51, an input device 52, and a wireless communication device 53. Note that the construction work support device 300 may be a portable computer (for example, a laptop personal computer (PC), a tablet PC, a mobile terminal device such as a smartphone, etc.). In the illustrated example, the construction work support device 300 is a desktop PC, the display device 51 is an LCD display, and the input device 52 is a keyboard and a mouse.

The control device 50 includes a computer equipped with a CPU, a RAM, a ROM, a non-volatile storage device, and so forth. The control device 50 reads programs for varying functional components from the ROM and loads them into the RAM, causing the CPU to execute appropriate processes. The individual functional component may be composed of hardware or of a combination of software and hardware.

In the illustrated example, the road machine 100 is an asphalt finisher, and the transport vehicle 200 is a dump truck. The road machine 100 may be a different type of road machine such as a concrete finisher. In the illustrated example, the road machine 100 is primarily composed of a tractor 1, a hopper 2, and a screed device 3. The screed device 3 is a mechanism for evening out the pavement material. To be more specific, the screed device 3 is a floating screed device that is connected to the tractor 1 via a leveling arm 3a and towed by the tractor 1. The hopper 2 is provided in a front part of the tractor 1 as a mechanism for receiving the pavement material. To be more specific, the hopper 2 is a mechanism that can open and close in the direction of the width of the road machine 100, aided by the hopper cylinder 2a, about mobile mechanism parts 81a and 81b as axes.

When the pavement material in the hopper 2 runs low, the road machine 100 opens the hopper 2 fully so that it can receive the pavement material from the truck bed 201 of the transport vehicle 200. The pavement material is, for example, an asphalt mixture. Then, the transport vehicle 200 dumps the pavement material while in contact with the road machine 100, thus supplying the pavement material from the truck bed 201 to the hopper 2.

Even while receiving the pavement material from the truck bed 201 of the transport vehicle 200, the road machine 100 continues to move (perform construction work such as paving), pushing the transport vehicle 200 forward. To be more specific, a conveyor CV delivers the pavement material received in the hopper 2 to the back of the tractor 1. A screw SR spreads the pavement material brought thereto by the conveyor CV and scattered over the surface of the road across a width equal to the width of the road machine 100. The screed device 3 evens out the pavement material scattered and spread by the screw SR behind the screw SR.

After receiving the pavement material from the truck bed 201 of the transport vehicle 200, the road machine 100 can deliver the pavement material in the hopper 2, to the back of the tractor 1, via the conveyor CV. Furthermore, when the amount of the pavement material in the hopper 2 falls below a predetermined level, the operator of the road machine 100 may close the hopper 2, so that the remaining pavement material in the hopper 2 can be collected and placed on the conveyor CV in the center part of the hopper 2. Furthermore, when the amount of the pavement material in the hopper 2 further decreases, the operator of the road machine 100 can open the hopper 2, so that the hopper 2 is ready to receive the pavement material from the transport vehicle 200. Typically, the operator of the transport vehicle 200 first confirms that the hopper 2 is fully open, and then moves the transport vehicle 200 backward into contact with the hopper 2.

The road machine 100 is equipped with a push roller 2b. The push roller 2b is installed forward with respect to the hopper 2. The push roller 2b is configured such that it can contact the rear wheels 202 of the transport vehicle 200. In the event the push roller 2b of the road machine 100 and the rear wheels 202 of the transport vehicle 200 are in contact with each other, the push roller 2b and the rear wheels 202 can rotate together.

The tractor 1 is a mechanism for allowing the road machine 100 to travel ("move," "run," etc.). In the illustrated example, the tractor 1 has front and rear wheels that are driven by travel hydraulic motors and rotate. The front wheels are configured to be steered by a steering wheel provided in the driver's seat. To be more specific, the tractor 1 is configured such that its rotation radius is greater than or equal to a predetermined minimum rotation radius. The travel hydraulic motors rotate by receiving a supply of hydraulic oil from a hydraulic oil pump, which serves as an oil pressure source. Note that the tractor 1 may also be equipped with crawlers instead of wheels.

The tractor 1 is also equipped with at least a controller 30, a wireless communication device 40, a main monitor 60, a driver's seat 61, an image capturing device 62, and a sound output device 63. To be more specific, a cab (operator's cabin), including the main monitor 60 and the driver's seat 61, is installed on the upper surface of the tractor 1. The image capturing device 62 and the sound output device 63 are installed in a center part of the front edge of the upper surface of the tractor 1.

The wireless communication device 40 is an example of an information acquiring device, which is a device for acquiring information related to (or "about") road construction work. The wireless communication device 40 is configured to communicate wirelessly with devices outside the road machine 100 ("outside devices"). In the illustrated example, the wireless communication device 40 is configured to communicate wirelessly with outside devices via an information communication network such as a mobile telephone communication network, a satellite communication network, a near-field wireless communication network, and so forth. The outside devices include the construction work support device 300.

The main monitor 60 is a device that shows various information to the operator of the road machine 100. In the illustrated example, the main monitor 60 is an LCD display and configured to display various information based on commands from the controller 30. The main monitor 60 also includes an input device 60a that receives operational inputs from the operator of the road machine 100.

The image capturing device 62 is an example of a space recognition device and configured to capture images of the space ahead of the road machine 100. In the illustrated example, the image capturing device 62 is a camera that outputs captured images to the controller 30. The image capturing device 62 may be other space recognition devices such as an RGBD camera, a LiDAR, a range imaging camera, an infrared camera, a stereo camera, and so forth.

The image capturing device 62 also functions as another example of an information acquiring device. For example, the image capturing device 62 captures images in an image-capturing range RA1, which is located in front of the road machine 100 and indicated by dashed-dotted lines in FIG. 1A and FIG. 1B. The image capturing device 62 outputs the captured images to the controller 30. In the examples shown in FIG. 1A and FIG. 1B, the image capturing device 62 captures images of the transport vehicle 200 when the transport vehicle 200 is in the image-capturing range RA1. The image capturing device 62 can also capture images of the pavement material in the hopper 2 when the hopper 2 is in the image-capturing range RA1. The road machine 100 may also be equipped with information acquiring devices such as an infrared or ultrasonic sensor that detects the height of the pile of the pavement material in the hopper 2, a load cell that detects the weight of the pavement material in the hopper 2, and so on.

The sound output device 63 outputs sound towards the area surrounding the road machine 100. In the illustrated example, the sound output device 63 is a speaker that outputs sound forward with respect to the road machine 100. The sound output device 63 can output sound such as warnings in response to commands from the controller 30. Alternatively, for example, the sound output device 63 may output voice messages.

The controller 30 controls the road machine 100. The controller 30 is composed of, for example, a computer, and includes a CPU, a built-in memory, a non-volatile storage device, and so forth. The controller 30 implements various controls by having the CPU execute programs stored in the non-volatile storage device.

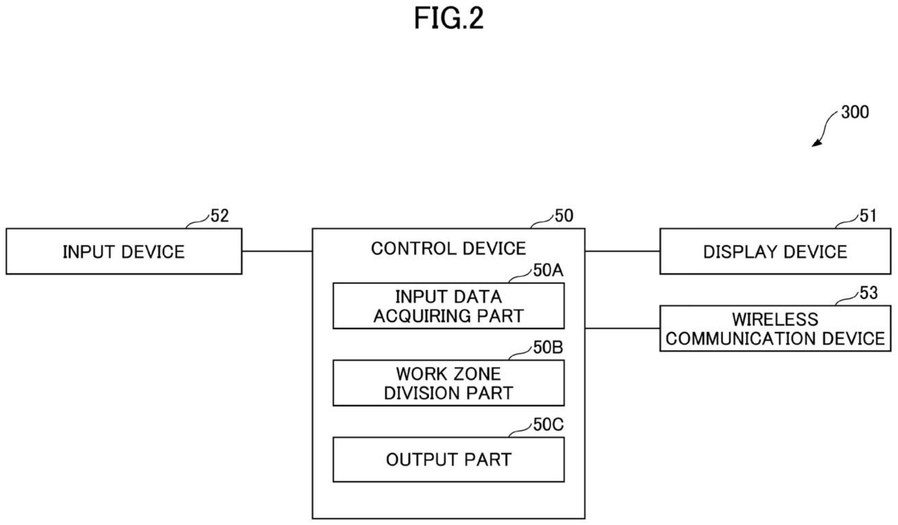

FIG. 2 is a block diagram showing an example structure of the construction work support device 300. In the illustrated example, the construction work support device 300 includes at least the control device 50, a display device 51, an input device 52, and a wireless communication device 53, as described above. The control device 50 performs various calculations based on information input via the input device 52. The control device 50 is configured to output control commands matching the calculation results to the display device 51, the wireless communication device 53, etc.

The control device 50 also includes functional components sch as an input data acquiring part 50A, a work zone division part 50B, and an output part 50C. These functional components are only conceptual representations and do not necessarily have to be physical independent components as shown in FIG. 2. In other words, part or all of the functional components may be functionally or physically separate or may be integrated in desired units. Furthermore, part or all of the functional components may be implemented by programs executed on the CPU. Alternatively, part or all of the functional components may be implemented as hardware using wired logic.

The input data acquiring part 50A is a functional component that acquires input data. In the illustrated example, the input data acquiring part 50A is configured to acquire input data, entered by the user of the construction work support device 300, via the input device 52. The input data acquiring part 50A may also be configured to acquire input data via the wireless communication device 53, or via another device such as a sound/voice input device.

The input data includes data about the work zone and data about specifications of the road machine 100. Examples of data about a work zone include, for example, design data about the size of the work zone. The design data may be data representing the work zone in two dimensions or in three dimensions (for example, data including altitude information). In addition, an image of the work zone captured from above may serve as a piece of data about the work zone. Additional data about the work zone may include, for example, data about the thickness of pavement (also referred to as "pavement thickness," "paving thickness," etc.). The data about specifications of the road machine 100 includes: data about the minimum rotation radius of the road machine 100; the maximum work width (the maximum width of pavement that the road machine 100 can lay); and the minimum work width (the minimum width of pavement that the road machine 100 can lay). The data about specifications of the road machine 100 may furthermore include at least one of, but are by no means limited to, the following: the maximum work thickness (the maximum thickness of pavement that the road machine 100 can lay); the minimum work thickness (the minimum thickness of pavement that the road machine 100 can lay); the minimum travel (working) speed of the tractor 1; the maximum traveling (working) speed of the tractor 1; the maximum extending/retracting speed of the screed device 3; the minimum extending/retracting speed of the screed device 3; the maximum speed at which the conveyor CV moves; the minimum speed at which the conveyor CV moves; the maximum rotation speed of the screw SR; or the minimum rotation speed of the screw SR.

The work zone division part 50B is a functional component that divides a work zone into multiple subsections. In the illustrated example, the work zone division part 50B is configured to divide a work zone into multiple subsections based on the input data received at the input data acquiring part 50A.

Each subsection spans a range over which the road machine 100 can work continuously or at a time. In other words, the road machine 100 first works on a first subsection among the multiple subsections, and works on a second subsection next, which is another subsection among the multiple subsections. Between the point where the road machine 100 finishes working on (paving) the first subsection and the point where the road machine 100 starts working on the second subsection, the road machine 100 moves without performing construction work (without paving). In the following description, when the road machine 100 moves/travels without performing construction work (paving), that is, when the road machine 100 moves with the screed device 3 raised, this may be referred to as "preparatory traveling mode." On the other hand, when the road machine 100 moves/travels when performing construction work (paving), this may be referred to as "work traveling mode." For example, while working on one subsection, the road machine 100 may change at least one of: its traveling (working) speed; the width of construction work it performs; or the thickness of pavement it lays.

Furthermore, a subsection may be designed to extend straight, may be designed to extend along a curve, or may be designed such that it has both a straight part and a curved part.

To be more specific, the work zone division part 50B is configured to divide a work zone into multiple subsections such that the road machine 100 does not cross a subsection where construction work (paving) has been completed. The work zone division part 50B may also be configured to divide a work zone into multiple subsections such that the transport vehicle 200 does not cross a subsection where construction work (paving) has been completed. The transport vehicle 200 enters the work zone to supply the road machine 100 with the pavement material. In this case, the work zone division part 50B may determine where (for example, at what points) in the work zone the road machine 100 should receive the pavement material from the transport vehicle 200.

In this way, the work zone division part 50B is configured to prepare a work zone's division plan that satisfies various predefined conditions. These predefined conditions include, for example, the minimum rotation radius, the maximum work width, and the minimum work width of the road machine 100, and the requirement that the road machine 100 and transport vehicle 200 must not cross parts in the work zone where construction work (paving) has been completed. Furthermore, additional predefined conditions may include that, for example, the preparatory traveling distance of the road machine 100 and transport vehicle 200 must be minimized. In the illustrated example, the work zone division part 50B is configured to prepare a work zone's division plan that satisfies various conditions or restrictions set forth in advance, by using an existing algorithm. However, the work zone division part 50B may also be configured to prepare an adequate division plan for a work zone by using an existing artificial intelligence technology and/or an existing machine learning technology. For example, the work zone division part 50B may be configured to prepare an adequate division plan for a work zone from an input image (shape) of the work zone by using deep learning image recognition.

The output part 50C is a functional component that outputs various data, such as the division plan prepared by the work zone division part 50B. In the illustrated example, the output part 50C is configured to display, on the display device 51, an image of the work zone division plan prepared by the work zone division part 50B. In this case, the user of the construction work support device 300 can determine whether the work zone division plan is feasible, by viewing the work zone division plan displayed on the display device 51. In the event the user of the construction work support device 300 determines that the division plan is a feasible one, the division plan can be printed out, sent outside, and so forth. The output part 50C may also be configured to send the work zone division plan to the road machine 100 via the wireless communication device 53. In this case, the controller 30 of the road machine 100 may create, for example, a route that the road machine 100 should follow, based on the division plan of the work zone received, and have the road machine 100 travel along that route automatically. This route may be at least one of a working route along which the road machine 100 travels G, or a preparatory route along which the road machine 100 travels when not performing construction work. The output part 50C may also be configured to store various data including the division plan, and the like, in a non-volatile storage medium such as a flash memory. In this case, the user of the construction work support device 300 can load the division plan and other data to the road machine 100 by inserting the non-volatile storage medium containing the division plan and other data into a read device built in the road machine 100.

The work zone division part 50B may create routes for the road machine 100. In this case, for example, the work zone division part 50B may divide a work zone into multiple subsections and then create travel routes for the road machine 100. Data about the travel routes created thus may be output together with data about the division plan.

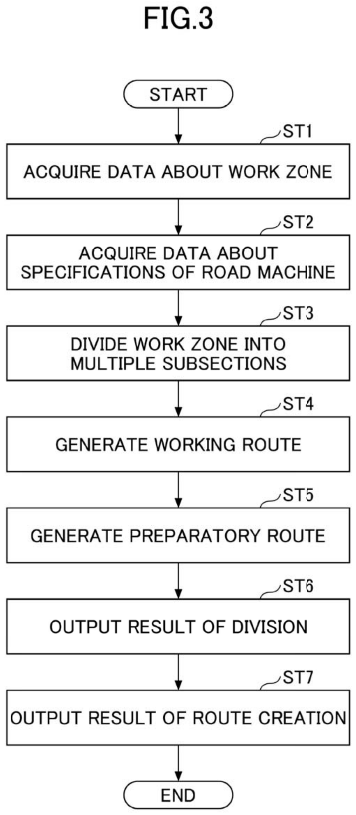

Next, referring to FIG. 3, an example of the process by which the control device 50 divides a work zone into multiple subsections (hereinafter also referred to as the "work zone (or site) division process") will be described. FIG. 3 is a flowchart showing an example of the work zone division process. In the illustrated example, the control device 50 performs this work zone division process every time input data is received.

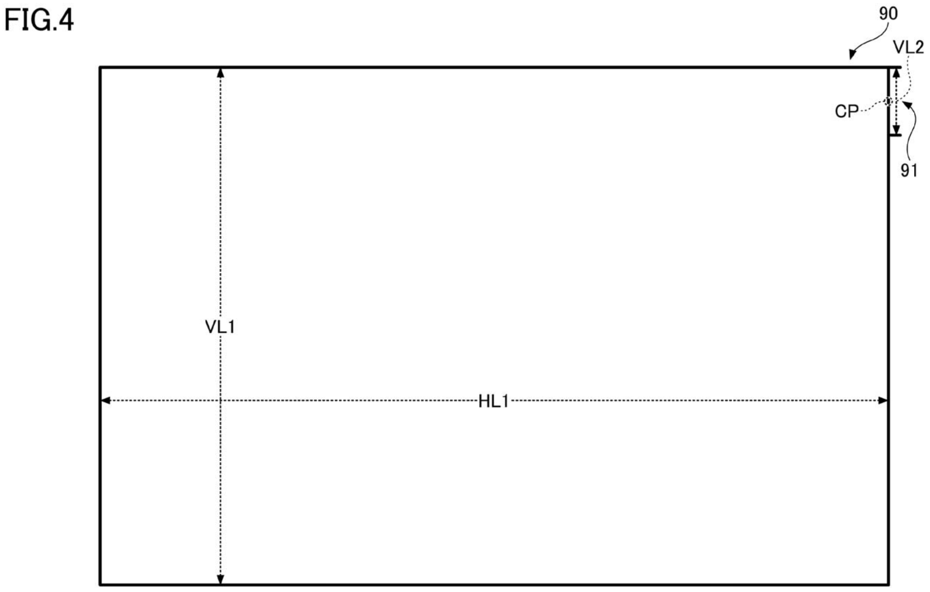

First, the control device 50 acquires data about a work zone 90 (step ST1). In the illustrated example, the data about the work zone 90 includes the size of the work zone 90 and the location of the entrance/exit through which the transport vehicle 200 enters and leaves the work zone 90. FIG. 4 shows a plan view of the work zone 90 for explaining data about the work zone 90. For example, referring to FIG. 4, if the work zone 90 is substantially rectangular in shape in plan view, the data about the work zone 90 may include the horizontal length HL1 of the work zone 90, the vertical length VL1 of the work zone 90, and the location of the entrance/exit 91 for the transport vehicle 200. Data about the location of the entrance/exit 91 for the transport vehicle 200 may include, for example, the width (vertical length VL2) of the entrance/exit 91 and the coordinates of the center CP of the entrance/exit 91. Furthermore, the width of the entrance/exit 91 may be the length in the horizontal direction, and two or more entrances/exits 91 may be provided. Furthermore, the work zone 90 is by no means limited to being an area that is substantially rectangular in plan view (such as a parking lot, an airport runway, etc.), as shown in the illustrated example. The work zone 90 may be: a substantially fan-shaped area like a baseball field; a substantially round, rectangular area like an athletics stadium; or an area of any other shape.

Subsequently, the control device 50 acquires data about specifications of the road machine 100 (step ST2). In the illustrated example, the data about specifications of the road machine 100 includes the minimum rotation radius, maximum work width, and minimum work width of the road machine 100. Therefore, the width of subsections determined as a result of the work zone division process is between the minimum work width and the maximum work width, inclusive. Furthermore, the curved parts in the subsections has a radius of curvature that is greater than or equal to the minimum rotation radius.

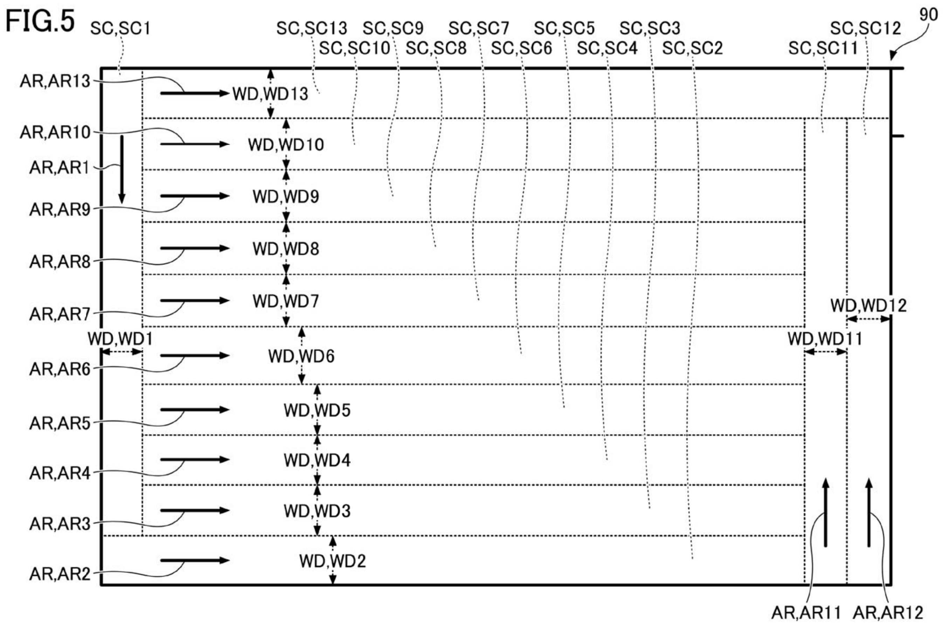

Subsequently, the control device 50 divides the work zone 90 into multiple subsections (step ST3). In the illustrated example, the control device 50 divides the work zone 90 into multiple subsections and determines the order in which the road machine 100 should work on the subsections. FIG. 5 shows a plan view of the work zone 90, illustrating the work zone 90 divided into multiple subsections SC and the order in which the road machine 100 performs construction work on the subsections SC. In the example of FIG. 5, the work zone 90 is divided into 13 subsections SC. These 13 subsections SC include the first subsection SC1 to the thirteenth subsection SC13. The 13 subsections SC are worked on (paved) in order from the first subsection SC1, the second subsection SC2, ..., the twelfth subsection SC12, and the thirteenth subsection SC13. The arrows in FIG. 5 indicate the direction of work AR (that is, the direction in which the road machine 100 moves and performs construction work) in each subsection SC. To be more specific, the directions of work AR in FIG. 5 include the first direction of work AR1 to the thirteenth direction of work AR13. The first direction of work AR1 (which points downward in FIG. 5) represents the direction in which the road machine 100 works in the first subsection SC1, and the second direction of work AR2 (which points to the right in FIG. 5) represents the direction in which the road machine 100 works in the second subsection SC2. The same applies to the third direction of work AR3 to the thirteenth direction of work AR13.

In the illustrated example, the first subsection SC1 has the smallest width, WD1, and the sixth subsection SC6 has the largest width, WD6. The entrance/exit 91 for the transport vehicle 200 may have any width (vertical length VL2) as long as the road machine 100 with the screed device 3 retracted and the transport vehicle 200 can enter and exit the work zone 90 therethrough. Furthermore, the width WD3 of the third subsection SC3, the width WD4 of the fourth subsection SC4, and the width WD5 of the fifth subsection SC5 are the same size. The width WD7 of the seventh subsection SC7, the width WD8 of the eighth subsection SC8, the width WD9 of the ninth subsection SC9, and the width WD10 of the tenth subsection SC10 are the same size. The width WD11 of the eleventh subsection SC11 and the width WD12 of the twelfth subsection SC12 are the same size. The width WD7 of the seventh subsection SC7 is larger than the width WD3 of the third subsection SC3, and the width WD3 of the third subsection SC3 is larger than the width WD13 of the thirteenth subsection SC13. Furthermore, the width WD13 of the thirteenth subsection SC13 is larger than the width WD2 of the second subsection SC2, and the width WD2 of the second subsection SC2 is larger than the width WD11 of the eleventh subsection SC11. In this way, the work zone 90 may be divided into multiple subsections such that the subsections SC have varying widths WD, or may be divided such that some of the subsections SC have the same width WD. Alternatively, the work zone 90 may be divided such that all the subsections SC have varying widths WD, or may be divided such that all the subsections SC have the same width WD.

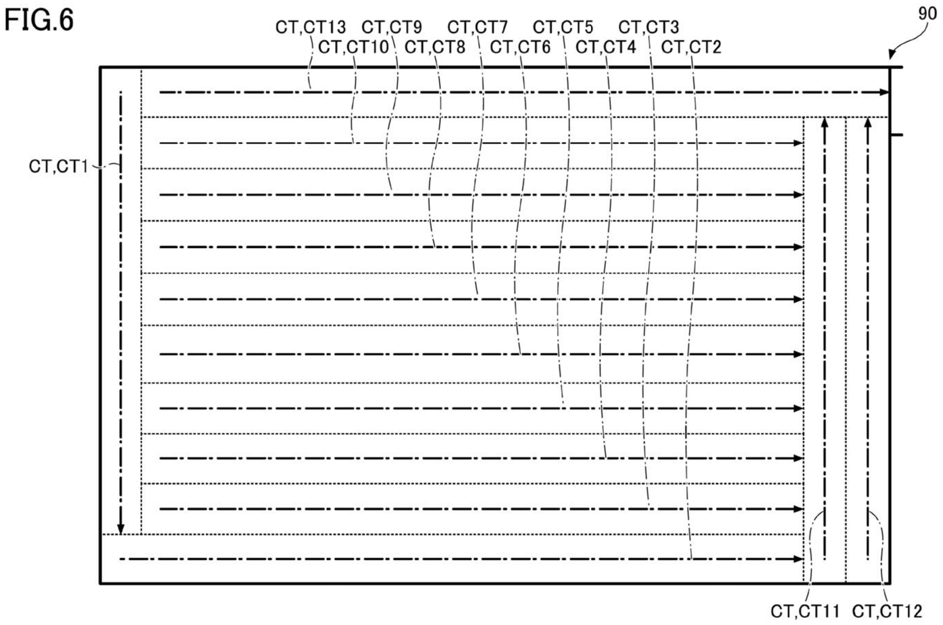

Referring to FIG. 3, after the work zone 90 is divided into multiple subsections SC, the control device 50 may create working routes, along which the road machine 100 performs construction work (step ST4). For example, in the example illustrated in FIG. 6, the control device 50 is configured to create a working route at a position bisecting the width WD of each subsection SC. FIG. 6 is a plan view of the work zone 90 for explaining a layout of working routes CT. The dashed-dotted arrows in FIG. 6 represent the working route CT in each subsection SC. To be more specific, the working routes CT in FIG. 6 include the first working route CT1 to the thirteenth working route CT13. The first working route CT1 is the working route in the first subsection SC1, and the second working route CT2 is the working route in the second subsection SC2. The same applies to the third working route CT3 to the thirteenth working route CT13.

For example, when data about a working route CT is acquired, the controller 30 of the road machine 100 controls the tractor 1 to run automatically such that its predetermined point (for example, its center point) follows the working route CT. The controller 30 also controls the screed device 3 to extend and retract automatically such that the left edge of the screed device 3 follows the left boundary of the subsection SC and the right edge of the screed device 3 follows the right boundary of the subsection SC.

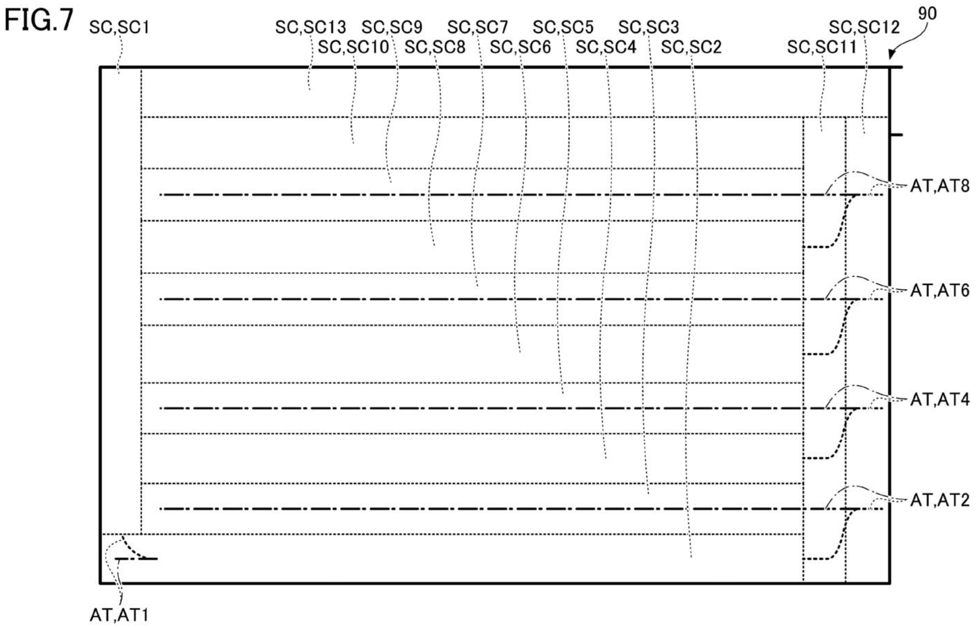

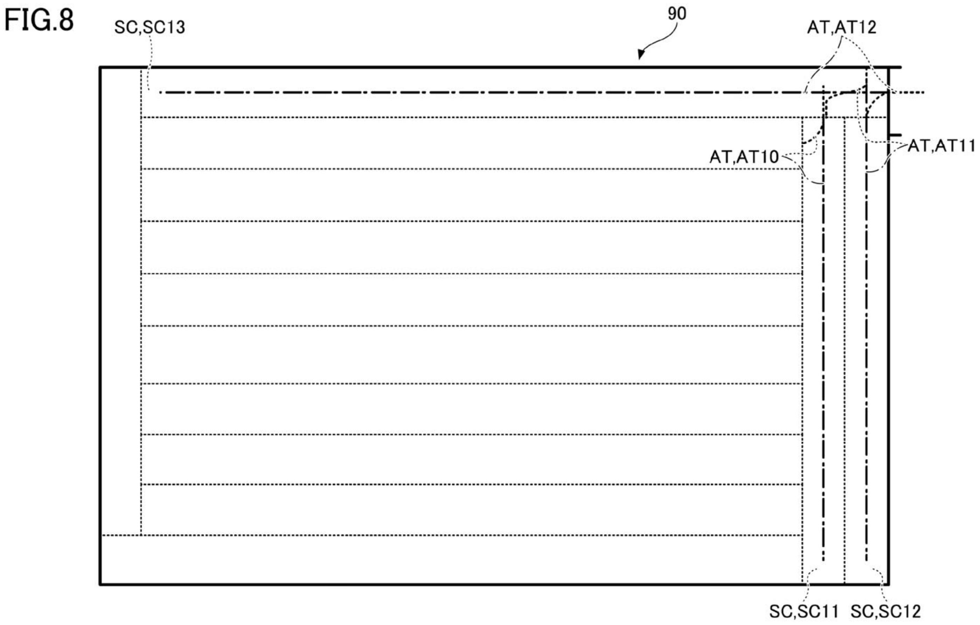

Also, as shown in FIG. 3, the control device 50 may create preparatory routes AT (step ST5) in the work zone 90. In the examples illustrated in FIG. 7 and FIG. 8, the control device 50 is configured to create preparatory routes AT in the work zone 90 such that each preparatory route AT connects between: the end point of the working route CT in a subsection SC where the road machine 100 finishes construction work; and the starting point of the working route CT in the subsection SC where the road machine 100 is going to work next. FIG. 7 and FIG. 8 are plan views of the work zone 90 for explaining a layout of preparatory routes AT. In FIG. 7 and FIG. 8, the bold dotted lines and dashed-dotted lines each represent a preparatory route AT that connects two working routes CT. To be more specific, still referring to FIG. 7 and FIG. 8, in the part of a given preparatory route AT represented by the bold dotted line, the road machine 100 moves forward. In the part of a given preparatory route AT represented by the bold dashed-dotted line, the road machine 100 moves backward. The preparatory routes AT include the first preparatory route AT1 to the twelfth preparatory route AT12. The first preparatory route AT1 connects the end point of the first working route CT1 and the starting point of the second working route CT2. The same applies to the second preparatory route AT2 to the twelfth preparatory route AT12. Also, for clarity, FIG. 7 selects and illustrates only the first preparatory route AT1, the second preparatory route AT2, the fourth preparatory route AT4, the sixth preparatory route AT6, and the eighth preparatory route AT8. The rest of the preparatory routes AT are not shown. Similarly, FIG. 8 selects and illustrates only the tenth preparatory route AT10, the eleventh preparatory route AT11, and the twelfth preparatory route AT12. The rest of the preparatory routes AT are not shown.

As illustrated clearly in FIG. 7, before the road machine 100 works on (paves) the second subsection SC2, the road machine 100 travels in the second subsection SC2 only along the first preparatory route AT1, in a preparatory fashion. In other words, because the second subsection SC2 is provided, the road machine 100 can pave the second subsection SC2 without crossing where pavement has already been laid. Furthermore, before the road machine 100 works on (paves) the eleventh subsection SC11 and the twelfth subsection SC12, the road machine 100 travels in the eleventh subsection SC11 and the twelfth subsection SC12 only along the second preparatory route AT2 to the ninth preparatory route AT9, in a preparatory fashion. In other words, because the eleventh subsection SC11 and the twelfth subsection SC12 are provided, the road machine 100 can pave the third subsection SC3 to the tenth subsection SC10 without crossing where pavement has already been laid. Additionally, as shown in FIG. 8, before the road machine 100 works on (paves) the thirteenth subsection SC13, the road machine 100 travels in the thirteenth subsection SC13 only along the tenth preparatory route AT10 to the twelfth preparatory route AT12, in a preparatory fashion. In other words, because the thirteenth subsection SC13 is provided, the road machine 100 can pave each of the eleventh subsection SC11 to the thirteenth subsection SC13 without crossing where pavement has already been laid.

The control device 50 may be configured to output the division plan of the work zone 90 (step ST6). In the illustrated example, the control device 50 displays, on the display device 51, the layout of the 13 subsections SC constituting the work zone 90 as a division plan, as shown in FIG. 5.

The control device 50 may also be configured to output the results of the above-described route preparation (step ST7) . In the illustrated example, the control device 50 displays layouts of working routes CT and preparatory routes AT, as shown in FIG. 6 to FIG. 8, on the display device 51, as results of the above-described route preparation.

In this way, the control device 50 can present the division plan and routes prepared as described above, to the user of the construction work support device 300. The user of the construction work support device 300 can view the division plan and routes displayed on the display device 51 and determine their feasibility. In the event the user of the construction work support device 300 determines that the division plan and routes are feasible, they may be printed, sent outside, and so on.

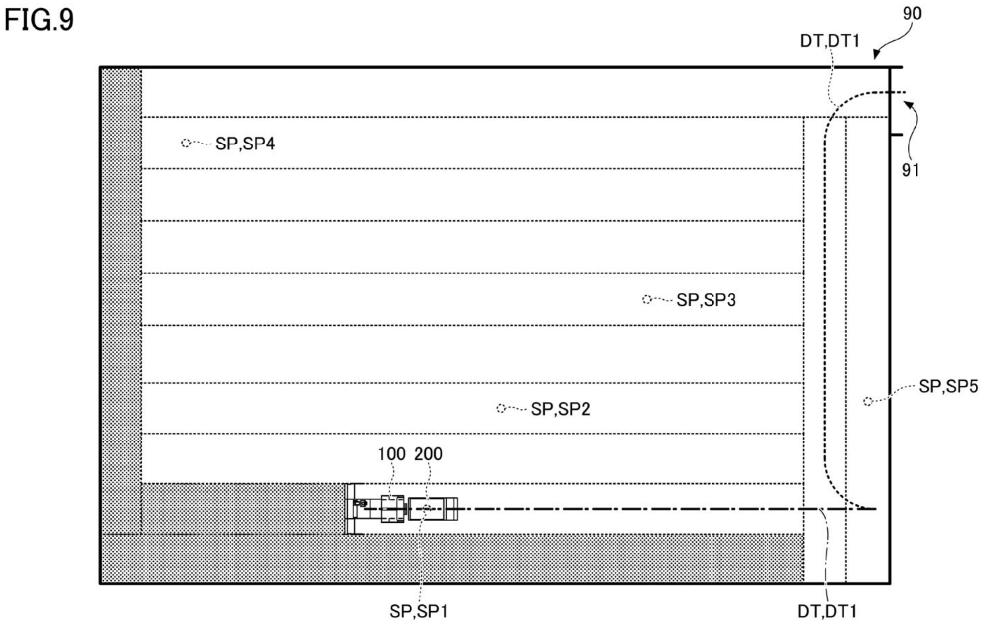

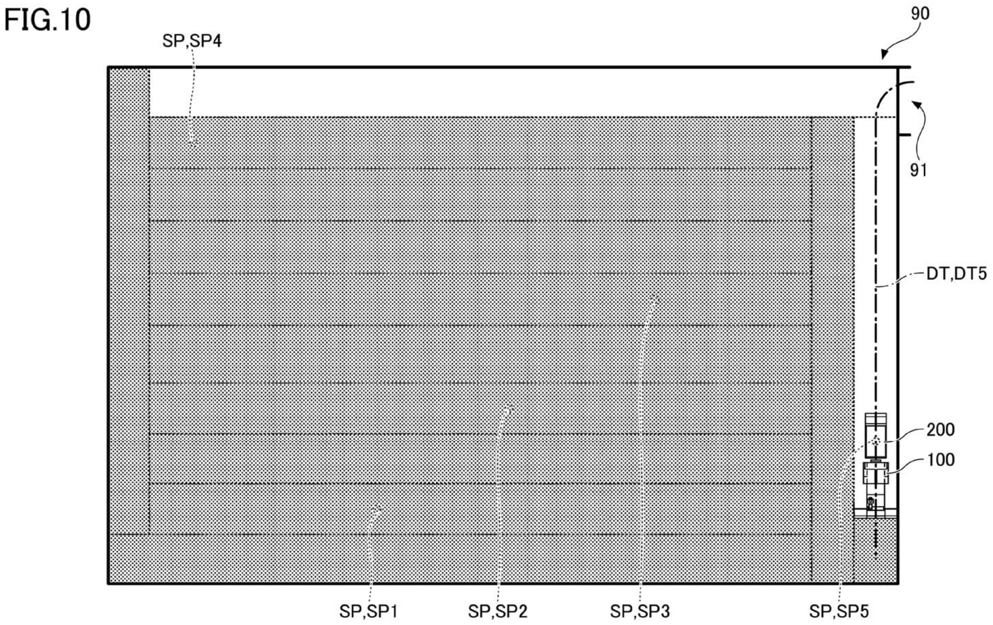

The control device 50 may also be configured to set supply points in the work zone 90 in advance. A supply point refers to a location where the transport vehicle 200 supplies the road machine 100 with the pavement material. The control device 50 may also be configured to set in advance the amount of supply at each supply point. The control device 50 may also be configured to create routes that the transport vehicle 200 having entered the work zone 90 has to follow to reach each supply point. A route along which the transport vehicle 200 travels in the work zone 90 is referred to as a "transport route." Referring to the examples of FIG. 9 and FIG. 10, the control device 50 is configured to determine supply points SP, determine the amount of supply at each supply point SP, and create transport routes DT such that the transport vehicle 200 in the work zone 90 does not have to cross where pavement has already been laid. FIG. 9 and FIG. 10 are plan views of the work zone 90, each illustrating a layout of supply points SP and transport routes DT. The supply points SP include the first supply point SP1 to a fifth supply point SP5. The pavement material is supplied from the transport vehicle 200 to the road machine 100 at the first supply point SP1, at the second supply point SP2, ..., and at the fifth supply point SP5, in order. FIG. 9 shows the status of the work zone 90 when the pavement material is being supplied at the first supply point SP1. FIG. 10 shows the status of the work zone 90 when the pavement material is being supplied at the fifth supply point SP5. Note that, in FIG. 9 and FIG. 10, parts that are already paved are shown with dot patterns for ease of explanation. In the example illustrated in FIG. 9, the supply points SP are positioned to meet a predetermined point (e.g., center point) of the transport vehicle 200, but they may also be positioned to meet a predetermined point (e.g., center point) of the road machine 100. The control device 50 may also send data about the transport routes DT to the transport vehicle 200. In this case, a control device (not shown) installed in the transport vehicle 200 may control the transport vehicle 200 to travel automatically such that a predetermined point (e.g., center point) of the transport vehicle 200 follows the transport routes DT.

The transport routes DT include the first transport route DT1 to a fifth transport route DT5. For example, as shown in FIG. 9, the first transport route DT1 is laid between the entrance/exit 91 for the transport vehicle 200 and the first supply point SP1. As shown in FIG. 10, the fifth transport route DT5 is laid between the entrance/exit 91 for the transport vehicle 200 and the fifth supply point SP5. The same applies to the second transport route DT2 to the fourth transport route DT4 (not shown). In the first transport route DT1 in FIG. 9, the part represented by the bold dotted line is where the transport vehicle 200 moves forward. Likewise, in the first transport route DT1, the part represented by the bold dashed-dotted line is where the transport vehicle 200 moves backward. In addition, in the fifth transport route DT5 in FIG. 10, the part represented by the bold dashed-dotted line is where the transport vehicle 200 moves backward.

Referring to FIG. 9, the control device 50 divides the work zone 90 into 13 subsections SC based on the assumption that the transport vehicle 200 travels along the first transport route DT1 in the work zone 90, arrives at the first supply point SP1, and supplies the road machine 100 with the pavement material. Also, as shown in FIG. 10, the control device 50 divides the work zone 90 into 13 subsections SC based on the assumption that the transport vehicle 200 travels along the fifth transport route DT5 in the work zone 90, arrives at the fifth supply point SP5, and supplies the road machine 100 with the pavement material.

In this way, the control device 50 is configured to divide the work zone 90 into multiple subsections SC and determine the order in which the road machine 100 should work on the subsections SC in such a way that satisfies the condition that the transport vehicle 200 must travel along transport routes DT without crossing where pavement has already been laid.

Although the accompanying drawings only show a method of dividing the work zone 90 when performing construction work (paving) the work zone 90 using one road machine 100, the control device 50 can divide the work zone 90 likewise when multiple road machines 100 work on (pave) the work zone 90. In this case, the specifications of one road machine 100 and those of other road machines 100 may be the same or different.

Furthermore, although the accompanying drawings show that the control device 50 of the construction work support device 300, which is located away from the work site (work zone 90), performs the work zone division process, the controller 30 installed in the road machine 100 may perform the work zone division process. In this case, the display device 51, input device 52, and wireless communication device 53 of the construction work support device 300 may be replaced with the main monitor 60, input device 60a, and wireless communication device 40, respectively. The work zone division process may be executed by a control device in a mobile terminal device belonging to the operator of the road machine 100, a worker, or any relevant party working at the work site.

As described above, the construction work support device 300 according to the herein-disclosed embodiment is configured to support the road machine 100 in construction work, and includes, as shown in FIG. 5, a control device 50 that is configured to receive information about the work zone 90 and specifications of the road machine 100 as input data, and divide the work zone 90 into multiple subsections SC based on the input data.

This configuration provides an advantage of enabling the road machine 100 to perform construction work efficiently in the work zone 90. This advantage is provided because the work zone 90, where the road machine 100 performs construction work, can be divided into multiple subsections SC appropriately and automatically. Furthermore, based on this configuration, even when the design data received as input data defines only the shape of the work zone 90 (i.e., which parts/subsections in the work zone 90 are to be worked on and in what order) after construction work is completed but does not define the shape while construction work is in progress, the work zone 90 can be divided into multiple subsections SC that are suitable to specifications of the road machine 100 that apply when construction work is in progress. This configuration can reduce, for example, the burden on the construction manager having to plan division of the work zone 90 into multiple subsections SC on paper by taking into account specifications of the road machine 100 that apply when construction work is in progress.

The control device 50 may be configured to determine the order in which the road machine 100 works on multiple subsections SC.

This configuration provides an advantage of enabling the road machine 100 to perform construction work in the work zone 90 even more efficiently. This advantage is provided because not only the layout of individual subsections SC but also the order in which the road machine 100 should work on these subsections SC are presented to the operator of the road machine 100.

Furthermore, as shown in FIG. 6, the control device 50 may also be configured to set working routes CT, which are routes the road machine 100 follows when working on multiple subsections SC.

This configuration provides an advantage of enabling the road machine 100 to perform construction work in the work zone 90 even more efficiently. This advantage is provided because the road machine 100 can travel and perform construction work in an automated fashion. To be more specific, according to this configuration, the road machine 100 can read data about working routes CT, thus enabling the road machine 100 to travel along the working routes CT in an automated fashion.

Additionally, the subsections SC may each span a range over which the road machine 100 can work continuously or at a time. In this case, as shown in FIG. 6, the subsections SC may include a first subsection SC1 on which the road machine 100 works first, and a second subsection SC2 on which the road machine 100 works next. Furthermore, as shown in FIG. 7 and FIG. 8, the control device 50 may be configured to set a preparatory route AT (first preparatory route AT1) between the first subsection SC1 and the second subsection SC2, so that the road machine 100 can follow the preparatory route AT1 when not performing construction work.

This configuration provides an advantage of enabling the road machine 100 to perform construction work in the work zone 90 even more efficiently. This advantage is provided because the road machine 100 can shift to preparatory traveling mode in an automated fashion. To be more specific, this configuration enables the road machine 100 to read data about preparatory routes AT, thus allowing the road machine 100 to travel along preparatory routes AT in an automated fashion. Furthermore, according to this configuration, data related to working routes CT and preparatory routes AT can be loaded to the road machine 100, thus allowing the road machine 100 to operate automatically not only when operating in work traveling mode but also when operating in preparatory traveling mode. Consequently, this configuration provides an advantage of realizing unmanned operation of the road machine 100.

As shown in FIG. 4, the input data may indicate the location of an entrance/exit 91 of the work zone 90, allowing the transport vehicle 200 to enter the work zone 90, come into contact with a front part the road machine 100, and supply the road machine 100 with the pavement material. The control device 50 may be configured to determine the order in which the road machine 100 should work on multiple subsections SC in the work zone 90 such that the transport vehicle 200 can arrive in front of the road machine 100 by avoiding parts where pavement has already been laid by the road machine 100.

This configuration provides an advantage of enabling the road machine 100 to work in the work zone 90 even more efficiently. This advantage is provided because the work zone 90 can be appropriately divided into multiple subsections SC by predicting how the transport vehicle 200, which supplies the road machine 100 with the pavement material, will move in the work zone 90.

The control device 50 may also be configured to determine the order in which the road machine 100 should work on multiple subsections SC such that the road machine 100 can move to subsections SC on which the road machine 100 is going to work subsequently, by avoiding subsections SC already paved by the road machine 100.

This configuration provides an advantage of enabling the road machine 100 to perform construction work in the work zone 90 even more efficiently. This advantage is provided because the work zone 90 can be appropriately divided into multiple subsections SC by taking into account how the status of the work zone 90 will change over time.

Furthermore, as shown in FIG. 1B, the road machine 100 according to the embodiment of the present disclosure may include: a tractor 1; a hopper 2 located in a front part of the tractor 1; a conveyor CV configured to deliver the pavement material in the hopper 2 to the back of the tractor 1; a screw SR configured to spread the pavement material, delivered to the back of the tractor 1 by the conveyor CV and scattered over the surface of the road, to span the width of the road machine 100; a screed device 3 configured to even out the pavement material, spread by the screw SR, behind the screw SR; and a controller 30 configured to: receive information about a work zone 90 and specifications of the road machine 100 as input data; and divide the work zone 90 into multiple subsections SC based on the input data.

This configuration provides an advantage of enabling the road machine 100 to perform construction work efficiently in the work zone 90. This advantage is provided because, according to this configuration, the work zone 90, in which the road machine 100 performs construction work, can be appropriately divided into multiple subsections SC, in an automated fashion.

In addition, as shown in FIG. 3, according to the embodiment of the present disclosure, a construction work support program for supporting the road machine 100 in construction work, when executed on a computer, causes the computer to: receive information about a work zone 90 and specifications of the road machine 100 as input data (steps ST1 and step ST2); and divide the work zone 90 into multiple subsections SC based on the input data (step ST3). Note that the construction work support program may be distributed in a non-volatile storage medium such as a flash memory, or may be downloaded via a communication network. When using existing machine learning technology, the machine learning model may be trained in a cloud environment or a local environment. The trained machine learning model may be deployed in the cloud environment or the local environment.

This construction work support program provides an advantage of enabling the road machine 100 to perform construction work efficiently in the work zone 90. This advantage is provided because the construction work support program allows the work zone 90, in which the road machine 100 performs construction work, to be divided, adequately and automatically, into multiple subsections SC.

The present disclosure has been described above in detail. However, the present disclosure is by no means limited to the above-described embodiment. Various alterations, replacements, and so forth may be applied to the above-described embodiment without departing from the scope of the present disclosure. Furthermore, features described herein as being separate features may be combined together unless technical inconsistencies arise.

## Claims

1. A device configured to support a road machine in construction work, the device comprising a control device that is configured to:
receive information about a work zone and specifications of the road machine as input data; and
divide the work zone into a plurality of subsections based on the input data.

2. The device according to claim 1, wherein the control device is further configured to determine an order in which the road machine performs the construction work on the plurality of subsections.

3. The device according to claim 1, wherein the control device is further configured to set routes along which the road machine travels and performs the construction work on the plurality of subsections.

4. The device according to claim 1,
wherein the plurality of subsections each span an area that the road machine can cover in a continuous operation or a single session,
wherein the plurality of subsections define at least a first subsection and a second subsection such that the road machine works on the first subsection first and works on the second subsection next, and
wherein the control device is further configured to set a route, between the first subsection and the second subsection, which the road machine follows when not performing the construction work.

5. The device according to claim 1,
wherein the input data indicates a location of an entrance or exit of the work zone, allowing a transport vehicle to enter the work zone, come into contact with a front part of the road machine, and supply the road machine with a pavement material, and
wherein the control device is further configured to determine the order in which the road machine performs the construction work on the plurality of subsections such that the transport vehicle can arrive in front of the road machine by avoiding parts in the work zone where the road machine has finished the construction work.

6. The device according to claim 2, wherein the control device is further configured to determine the order in which the road machine performs the construction work on the plurality of subsections such that the road machine can move to subsections on which the road machine is going to work subsequently, by avoiding parts in the work zone where the road machine has finished the construction work.

7. A road machine comprising:
a tractor;
a hopper located in a front part of the tractor;
a conveyor configured to deliver a pavement material in the hopper to back of the tractor;
a screw configured to spread the pavement material, delivered to the back of the tractor by the conveyor and scattered over a surface of road, across a width equal to a width of the road machine;
a screed device configured to even out the pavement material, spread by the screw, behind the screw; and
a control device configured to:
receive information about a work zone and specifications of the road machine as input data; and
divide the work zone into a plurality of subsections based on the input data.

8. A computer-readable non-transitory recording medium storing a program for supporting a road machine in construction work, the program, when executed on a computer, causing the computer to:
receive information about a work zone and specifications of the road machine as input data; and
divide the work zone into a plurality of subsections based on the input data.
